# EUROPEAN PATENT SPECIFICATION

(11) **EP 3 561 652 B1**
(45) Date of publication and mention of the grant of the patent: **05.11.2025**
(21) Application number: 17883182.2
(22) Date of filing: 19.12.2017
(51) Int. Cl.: G06F 1/16, G06F 3/0488, G06F 3/04817, G06F 3/0481, H04M 1/04, H04M 1/72409, G09G 5/00, G09G 5/14, G09G 5/36

(54) **MOBILE TERMINAL DEVICE, INFORMATION PROCESSING DEVICE, COOPERATIVE SYSTEM, AND METHOD FOR CONTROLLING DISPLAY**
MOBILE ENDGERÄTEVORRICHTUNG, INFORMATIONSVERARBEITUNGSVORRICHTUNG, KOOPERATIVES SYSTEM UND VERFAHREN ZUR STEUERUNG EINER ANZEIGE
DISPOSITIF TERMINAL MOBILE, DISPOSITIF DE TRAITEMENT D'INFORMATIONS, SYSTÈME COOPÉRATIF ET PROCÉDÉ DE COMMANDE D'AFFICHAGE

(30) Priority: 22.12.2016 JP 2016249757
(43) Date of publication of application: 30.10.2019
(73) Proprietor: Pioneer Corporation, Tokyo 113-0021 (JP)
(72) Inventor: NAGAO, Shunichiro, Kawagoe-shi Saitama 350-8555 (JP); TAKANO, Masashi, Kawagoe-shi Saitama 350-8555 (JP); SHIMOKAWA, Hirofumi, Kawagoe-shi Saitama 350-8555 (JP); HATA, Kazuya, Kawagoe-shi Saitama 350-8555 (JP)
(74) Representative: Grünecker Patent- und Rechtsanwälte PartG mbB
(86) International application number: PCT/JP2017/045480
(87) International publication number: WO 2018/117085

(56) References cited:
- JP-A- 2011 259 259
- JP-U- H0 736 234
- US-A1- 2008 163 049

## Description

### TECHNICAL FIELD

The present invention relates to a mobile terminal device, to an information processing device, to a cooperative system, to a method for controlling a display, and to a program for controlling a display.

### BACKGROUND ART

From the past, an information device is provided with an input unit in which hard keys and touch keys and so on are arranged. The information device is adapted to perform processing of various kinds according to input actuation upon the input unit by the user.

A technique for performing input as desired without checking the key layout has been proposed as a technique related to this type of input actuation (refer to Patent Document 1, hereinafter termed the "Prior Art Example"). With the technique of the Prior Art Example, if a predetermined word is included in the result of input voice recognition, then a touch key associated with that predetermined word is assigned to a relatively large area upon the working area of the touch panel, without the image displayed upon the display screen on which the touch panel is provided being changed.

Patent Document 2 describes a system, wherein an external smart phone is connected to an in-vehicle electronic device. The on-vehicle electronic device acquires application information relating to an application stored in the smart phone from the smart phone. Based on the acquired application information, one or more applications are allocated to one or more preset keys and displayed on a touch panel screen of the in-vehicle device. In particular, all of the icons defined by an operational mode of the smart phone are displayed on the display unit of the smart phone in both of two possible operation states.

Patent Document 3 describes a key input device, with a function of each input key selected by system software being displayed on a liquid crystal display device corresponding to the input key.

Patent Document 4 describes an entertainment system that is capable of allowing content selection from different sources (broadcast and non-broadcast), without a user having to manifest the change of source selection for this purpose, and soft buttons with on-screen labelling are provided. A control unit may be detachably connected to a main apparatus unit and operate in two modes, depending on whether it is attached to or detected from the main apparatus.

### PRIOR ART DOCUMENTS

### PATENT DOCUMENTS

Patent Document 1 : Japanese Laid-Open Patent Publication 2010-281572.
Patent Document 2: Japanese Laid-Open Patent Publication 2011/259259 A
Patent Document 3: Japanese Laid-Open Utility Model JP H07 36234 U
Patent Document 4: US Patent Appilication Publication US2008/163049 A1

### SUMMARY OF THE INVENTION

### PROBLEM TO BE SOLVED BY THE INVENTION

With the technique of the Prior Art Example, no display of the function of the touch key is provided. Due to this, the user is not able to know whether or not the predetermined word has been correctly recognized by voice recognition and the appropriate touch key has been correctly assigned. As a result there is a possibility that, when the user actuates a touch key, processing may be performed contrary to the intention of the user.

Nowadays, mobile terminal devices such as smartphones and so on are widely employed. The input unit on such a mobile terminal device is usually built to include a touch panel, but it is essential for a mobile terminal device to be portable, and accordingly there is a limit to the area of such a touch panel. And in recent years mobile terminal devices, as represented by smartphones, have acquired more functions, so that there is a tendency for the number of touch keys to become greater. Due to this, there is a tendency for the area of the region for each of the touch keys to become smaller. As a result, when the user is performing actuation of a touch key, it is necessary for him to look attentively at the display of the corresponding icon. Tendencies such as described above can make it difficult to perform actuation input upon a mobile terminal device in a simple manner.

Now, there are various types of information processing devices to which various types of input units are provided, and various measures have been instituted in order for the user to be able simply and reliably to perform actuation input upon such input units. For example, in the case of an input unit that is provided to an item of electronic equipment that is mounted to a vehicle, measures have been instituted for the user to be able to perform actuation input simply, safely, and reliably.

Due to this, there is a demand for an improved technique that, when actuation input is to be performed to a mobile terminal device, enables the user to employ the input unit of a different information processing device, in an easy manner. To respond to this requirement is one of the problems that the present invention is intended to solve.

### MEANS FOR SOLVING THE PROBLEMS

This is achieved by the features of the independent claims.

### BRIEF DESCRIPTION OF DRAWINGS

Fig. 1 is a block diagram showing the configuration of a cooperative system according to an embodiment of the present invention;
Fig. 2 is a figure for explanation of the external appearances of an information processing device and a mobile terminal device in a cooperative system according to the first example;
Fig. 3 is a figure for explanation of the internal configurations of the information processing device and the mobile terminal device of Fig. 2;
Fig. 4 is a flow chart for explanation of processing performed by a control unit of Fig. 3;
Fig. 5 is a figure for showing an example of change of display in the first example;
Fig. 6 is a figure for explanation of the internal configurations of an information processing device and a mobile terminal device in a cooperative system according to the second example;
Fig. 7 is a flow chart for explanation of processing performed by a control unit of Fig. 6;
Fig. 8 is a figure for explanation of the internal configurations of an information processing device and a mobile terminal device in a cooperative system according to the third example;
Fig. 9 is a flow chart (part 1 thereof) for explanation of processing performed by a control unit of Fig. 8;
Fig. 10 is a flow chart (part 2 thereof) for explanation of processing performed by the control unit of Fig. 8; and
Fig. 11 is a figure for showing an example of change of display in the third example.

### REFERENCE SIGNS LIST

100A ··· information processing device
110 ··· input unit
120 ··· display unit (information display unit)
121 ··· first display areas
122 ··· second display area
150 ··· holding unit
200A ··· mobile terminal device
220A ··· control unit (display control unit and specification unit)
230 ··· display unit (mobile display unit)
300A ··· cooperative system
700 ··· information processing device
710 ··· input unit
720 ··· information display unit
721 ··· first display areas
722 ··· second display area
800 ··· mobile terminal device
810 ··· specification unit
820 ··· display control unit
830 ··· mobile display unit
900 ··· cooperative system

### EMBODIMENTS FOR CARRYING OUT THE INVENTION

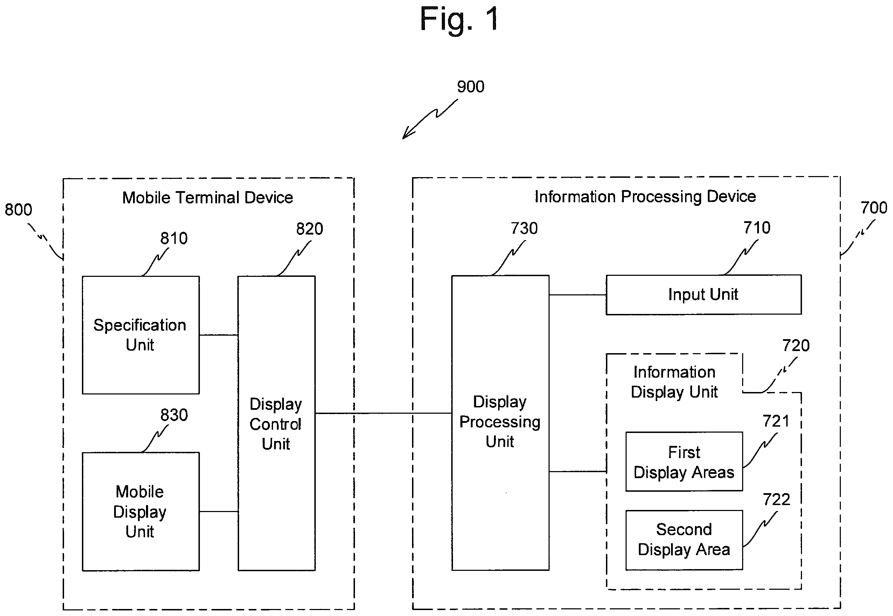

In the following, an embodiment of the present invention will be explained with reference to Fig. 1. Note that, in the following explanation, the same reference symbols are appended to elements that are the same or equivalent, and duplicated explanation will be omitted.

### [Configuration]

The configuration of a cooperative system 900 according to an embodiment is shown in Fig. 1. As shown in Fig. 1, the cooperative system 900 comprises an information processing device 700 and a mobile terminal device 800. Here, the mobile terminal device 800 is adapted to be capable of being detachably held by a holding unit not shown in the figures that is provided to the information processing device 700.

Furthermore, the information processing device 700 and the mobile terminal device 800 are capable of communicating with one another. Here, the connection for communication between the information processing device 700 and the mobile terminal device 800 may be a wired connection via a cable, or may be a wireless connection via short-range radio communication.

### <Configuration of the information processing device 700>

The information processing device 700 comprises an input unit 710, an information display unit 720, and a display processing unit 730. Here, the information processing device 700 may include various elements other than the above elements. And the information processing device 700 is adapted to perform operation while cooperating with the mobile terminal device 800, or alternatively to perform operation while not cooperating with the mobile terminal device 800, by changing over between these two operational modes.

The input unit 710 has at least a single actuation region that is capable of receiving actuation by a user. In the present embodiment, the actuation region is a region including a plurality of hard keys that perform input due to being actuated by being mechanically depressed. And, in the present embodiment, the keytop portions of these hard keys have shapes that are concaved downward with respect to their edge regions, so that their edge regions can be identified by touch.

The information display unit 720 receives display data sent from the display processing unit 730. And the information display unit 720 provides a display according to that display data.

The information display unit 720 has at least one first display area 721 and a second display area 722. Here, the first display area 721 is arranged upon the actuation region of the input unit 710. In the embodiment, the first display areas 721 are distributed over the keytop portions of the hard keys described above. In other words, the first display areas 721 are a collection of a plurality of discrete regions that are located upon the individual hard keys. And an icon may be displayed in each of these discrete regions.

Furthermore, the second display area 722 is disposed in a position different from that of the input unit 710. The second display area 722 is capable of displaying character information and so on.

When the information processing device 700 and the mobile terminal device 800 are performing cooperative operation, the display processing unit 730 receives display designations transmitted from the mobile terminal device 800. And the display processing unit 730 generates display data on the basis of these display designations. The display data that has been generated in this manner is sent to the information display unit 720. As a result, display is performed by the information display unit 720 according to the display designations transmitted from the mobile terminal device 800.

Note that, when the information processing device 700 and the mobile terminal device 800 are not performing cooperative operation, the display processing unit 730 generates its own display data, and sends the display data that has thus been generated to the information display unit 720. As a result, a display that is individual to the information processing device 700 is provided by the information display unit 720.

### < Configuration of the mobile terminal device 800>

The mobile terminal device 800 comprises a specification unit 810, a display control unit 820, and a mobile display unit 830. Here, the mobile terminal device 800 also may include various elements other than the above elements, and thereby is adapted to be capable of performing various functions intrinsic to the mobile terminal device 800.

The specification unit 810 specifies the operational state, which includes the operational mode that is being executed by the mobile terminal device 800. And the specification unit 810 sends the result of the specification to the display control unit 820.

The display control unit 820 internally holds icon allocation information, for each operational mode of the mobile terminal device 800, related to icon display allocation in the first display areas 721 and upon the mobile display unit 830, and also holds display information for the second display area 722 for each operational state of the mobile terminal device 800. Here, the icon allocation information includes information about the shapes of icons that are to be displayed upon the mobile display unit 830 when cooperative operation is not being performed, and also information about the shapes of icons to be displayed in the first display areas 721 during cooperative operation. Moreover, for each of these operational modes, it is arranged for the icons that are allocated in the first display areas 721 not to be included in the icon allocation information as being icons that are allocated upon the mobile display unit 830 in the same operational mode.

The display control unit 820 receives the specification result sent from the specification unit 810. And, during cooperative operation of the mobile terminal device 800 and the information processing device 700, according to the specification result, the display control unit 820 performs generation of the display designation to be transmitted to the information processing device 700 (in more detail, to be transmitted to the display processing unit 730), and also performs generation of display data corresponding to the image to be displayed upon the mobile display unit 830. Note that the processing executed by the display control unit 820 in relation to this generation of the display designation during cooperative operation and this generation of display data during cooperative operation will be described hereinafter.

The display designation that has thus been generated is transmitted to the information processing device 700. Moreover, the display data that has been generated is sent to the mobile display unit 830.

Note that, when the mobile terminal device 800 is not performing cooperative operation with the information processing device 700, the display control unit 820 generates its own display data, and sends the display data that it has thus generated to the mobile display unit 830. As a result, an individual display is provided by the mobile display unit 830 upon the mobile terminal device 800.

The mobile display unit 830 receives the display data sent from the display control unit 820. And the mobile display unit 830 provides a display according to the display data.

Note that it would be acceptable for a touch panel not shown in the figures to be provided upon the display screen of the mobile display unit 830, and for the user to be able to perform input actuation by employing the touch panel.

### [Operation]

Next, the operation of the cooperative system 900 having the configuration described above will be explained, with attention being principally focused upon the processing performed by the display control unit 820 during cooperative operation. Note that, the information processing device 700 and the mobile terminal device 800 are performing cooperative operation.

During cooperative operation, upon receipt of the specification result by the specification unit 810, the display control unit 820 makes a transition decision as to whether or not a transition of the operational state of the mobile terminal device 800 has occurred. If the result of the transition decision is negative, then the transition decision is repeated.

If the result of the transition decision is affirmative, then the display control unit 820 makes an operational mode change decision as to whether or not the operational state transition of the mobile terminal device 800 is a transition that is accompanied by a change of the operational mode. If the result of the operational mode change decision is negative, then the display control unit 820 generates display data corresponding to an image that is to be displayed upon the mobile display unit 830 after the operational state transition. And the display control unit 820 sends the display data that has thus been generated to the mobile display unit 830. As a result, the image after the operational state transition is displayed upon the mobile display unit 830.

Note that it is arranged for display data for the icons displayed in the first display areas 721 not to be included in the display data for the image that is displayed upon the mobile display unit 830.

Subsequently, the display control unit 820 makes an information change decision as to whether or not the information displayed in the second display area 722 is to be changed along with the operational state transition. If the result of the information change decision is negative, then the display control unit 820 terminates the processing accompanying the above operational state transition, and waits for a report of the next specification result by the specification unit 810.

If the result of the information change decision is affirmative, then the display control unit 820 generates new information to be displayed in the second display area 722 as display designation. And the display control unit 820 transmits the display designation that has thus been generated to the information processing device 700. As a result, information corresponding to the new operational state is displayed in the second display area 722. And the display control unit 820 terminates the processing associated with the operational state transition, and waits for a report of the next specification result by the specification unit 810.

If the result of the operational mode change decision described above is affirmative, then first, on the basis of the internally stored icon allocation information described above, the display control unit 820 determines upon one or more icons corresponding to the new operational mode to be displayed in the first display areas 721, and upon one or more icons corresponding to the new operational mode to be displayed upon the mobile display unit 830. Subsequently, on the basis of the internally stored display information described above, the display control unit 820 generates information including the new operational mode to be displayed in the second display area 722 along with the change of operational mode.

Next, the display control unit 820 generates display data corresponding to the image to be displayed upon the mobile display unit 830 after the change of operational mode, including the icon or icons that have been determined as being the icon or icons to be displayed upon the mobile display unit 830. And the display control unit 820 sends the display data that it has thus generated to the mobile display unit 830. As a result, the image after change of the operational mode is displayed upon the mobile display unit 830.

Subsequently, as display designations, the display control unit 820 generates information including icons to be displayed in the first display areas 721 and the shape thereof, and the new operational mode to be displayed in the second display area 722. And the display control unit 820 transmits the display designations that it has thus generated to the information processing device 700. As a result, along with the icons corresponding to the new operational mode of the mobile terminal device 800 being displayed in the first display areas 721, also information corresponding to the new operational mode is displayed in the second display area 722. And the display control unit 820 terminates the processing associated with the operational state transition for change of the operational mode, and waits for a report of the next specification result by the specification unit 810.

Note that, if the information processing device 700 and the mobile terminal device 800 are not performing cooperative operation, then, as described above, respective individual displays are displayed upon the information display unit 720 of the information processing device 700 and upon the mobile display unit 830 of the mobile terminal device 800.

As explained above, in the embodiment, the specification unit 810 specifies the operational state including the operational mode of the mobile terminal device 800, and sends the specification result to the display control unit 820. And, when the information processing device 700 and the mobile terminal device 800 are performing cooperative operation, and it is discovered by means of the specification result that the operational mode has changed, then, corresponding to this change of operational mode, the display control unit 820 generates display designation including icons to be displayed in the first display areas 721 of the information processing device 700 and there shapes. And then the display control unit 820 transmits the display designation that have thus been generated to the information processing device 700.

Thus, according to the present embodiment, it is possible to employ the input unit 710 of the information processing device 700 in an appropriate manner when performing actuation input to the mobile terminal device 800, so that it is possible to enhance the convenience for the user.

Furthermore, in the present embodiment, the shapes of the icons that are displayed in the first display areas 721 are the same as the shapes of the icons that are displayed upon the mobile display unit 830 for actuation of the same function, when the mobile terminal device 800 and the information processing device 700 are not performing cooperative operation (including the case in which they are not connected together). Due to this, the user is able to perform input actuation without experiencing any sense of discomfort while performing input to the mobile terminal device 800 by employing the actuation region upon which the first display areas 721 are disposed.

Moreover, in the present embodiment, information about the operational state of the mobile terminal device 800 is displayed in the second display area 722. Due to this, it is possible to enhance the convenience for the user when performing input by employing the actuation region in which the first display areas 721 are disposed.

Yet further, in the present embodiment, the shape of each actuation region upon the input unit 710 of the information processing device 700 is concave with respect to the peripheral region of that actuation region, and is a shape that the user can identify by his sense of touch. Due to this, it is possible for the user to perform identification of the desired actuation region simply and easily, so that it is possible to enhance the convenience for the user.

Even further, in the present embodiment, the mobile terminal device 800 is held by the holding unit provided to the information processing device 700 so as to be easily detachable. Due to this, if for example the information processing device 700 is a device that is mounted to a vehicle, then it is possible to dispose the mobile terminal device 800 in a position that is fixed with respect to the user, and thereby it is possible to enhance the convenience for the user, since the mobile terminal device 800 is disposed in a position in which the user can simultaneously visually check both the information processing device 700 and the mobile terminal device 800.

### [Modification of embodiment]

The present invention is not to be considered as being limited to the embodiment described above; modifications of various kinds are possible to implement thereto.

For example, in the embodiment described above, the shape of the actuation regions upon the input unit of the information processing device were made to be concave with respect to the peripheral regions of those actuation regions. By contrast, it would also be acceptable to make the shape of the actuation regions upon the input unit of the information processing device to be convex with respect to the peripheral regions of those actuation regions. In this case as well, it would be possible for the user to perform identification of the desired actuation region in a simple and easy manner, so that the convenience for the user can be enhanced.

Moreover, in the embodiment described above, it was arranged to build the input unit of the information processing device to include hard keys. By contrast, it would also be possible to build the input unit of the information processing device to include soft keys such as touch keys or the like.

And, among the icons that are to be displayed in the first display areas before the change of operational mode but whose display in the first display areas is not to be performed after the change of operational mode, it will be acceptable to arrange for an icon that is specified as one whose display is ensured even after the change of operational mode to be included as an icon to be displayed upon the mobile display unit. In this case, an icon that can become a subject of actuation even in the operational mode after change may be displayed on a logical basis either upon the mobile display unit or in the first display areas.

Furthermore, the information processing device in the embodiment described above may be a device that is mounted to a vehicle, or may be a device that is provided within a dwelling.

Yet further, in the embodiment described above, it is arranged to determine upon the icons to be displayed in the first display areas and the icons to be displayed upon the mobile display unit on the basis of icon allocation information that is determined in advance. By contrast, it would also be acceptable to determine upon the icons to be displayed in the first display areas while giving higher order of priority to those whose frequency of usage of the actuation region corresponding to the icons displayed in each operational mode is higher.

Even further, in the embodiment described above, it was arranged for the display control unit to hold internally the icon display allocation information for each operational mode of the mobile terminal device, and the display information for the second display area for each operational state of the mobile terminal device. By contrast, it would also be acceptable to arrange for the icon display allocation information for each operational mode of the mobile terminal device, and the display information for the second display area for each operational state of the mobile terminal device, to be held in an external server, and to arrange for the icon display allocation information and the display information for the second display area related to the identified operational state to be acquired from that external server via a communication network.

Still further, while in the embodiment described above it is arranged to perform allocation of display of icons for each of the operational modes on the side of the mobile terminal device, it would also be acceptable to arrange to perform this icon display allocation on the side of the information processing device.

Note that it would also be acceptable for the specification unit 810 and the display control unit 820 in the embodiment described above to be implemented by provision of a computer serving as a calculation means that includes a central processing device (CPU: Central Processing Unit) or the like, and for some or all of the functions of the specification unit 810 and the display control unit 820 in the embodiment described above to be implemented by a program prepared in advance being executed by that computer. This program could be recorded upon a recording medium capable of being read in by a computer, such as a hard disk, a CD-ROM, a DVD, or the like, and would be read out by the computer from that recording medium and executed. Moreover, it would be possible to arrange for this program to be acquired in the format of being recorded upon a transportable recording medium such as a CD-ROM, a DVD, or the like, or to be acquired in a format of being distributed via a network such as the internet or the like.

### EXAMPLES

In the following, examples of the present invention will be explained with reference to the drawings. Note that, in the following explanation and drawings, the same reference symbols are appended to elements that are the same or equivalent, and duplicated explanation will be omitted.

### [The first example]

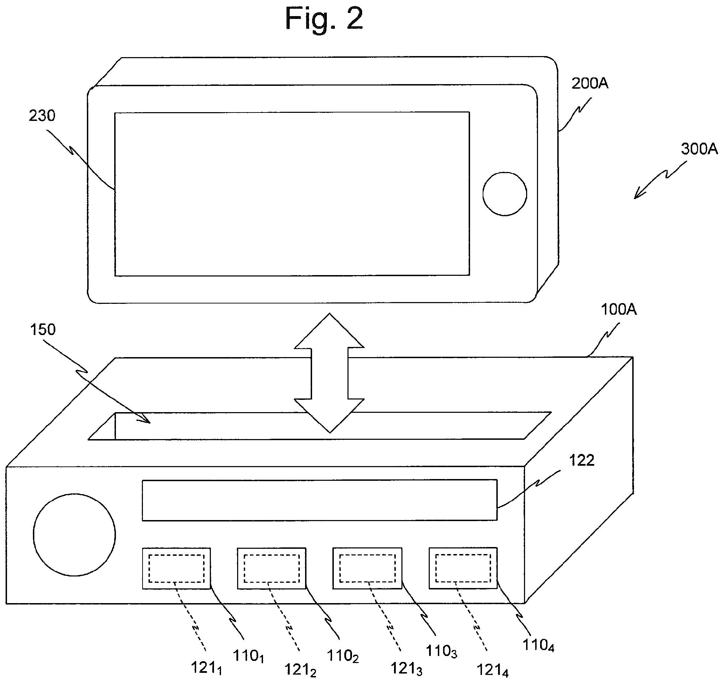

First, the first example of the present invention will be explained with reference being principally made to Figs. 2 through 5.

### <Configuration>

Fig. 2 is a figure schematically showing the configuration of a cooperative system 300A according to the first example. As shown in Fig. 2, this cooperative system 300A comprises an information processing device 100A that fulfils the function of the information processing device 700 in the embodiment described above, and a mobile terminal device 200A that fulfils the function of the mobile terminal device 800 in the embodiment described above. Here, the mobile terminal device 200A is adapted to be detachably held by a holding unit 150 that is provided to the information processing device 100A.

Furthermore, communication between the mobile terminal device 200A and the information processing device 100A is possible. Here, the connection for communication between the mobile terminal device 200A and the information processing device 100A may be a wired connection via a cable, or may be a wireless connection via short distance radio communication.

In addition to the holding unit 150, the information processing device 100A comprises actuation keys 110₁ through 110₄. In the first example, these actuation keys 110₁ through 110₄ are a plurality of hard keys that perform input due to being actuated by being mechanically pressed downward. And the actuation regions of the actuation keys 110₁ through 110₄, which are their keytop portions, have concave shapes with respect to their peripheral regions, so that the user can identify these peripheral regions by the sense of touch.

In the following, when the actuation keys 110₁ through 110₄ are being referred to generically, they will be termed the "input units 110". Note that these input units 110 are adapted to fulfil the functions of the input unit 710 in the embodiment described above.

Moreover, the information processing device 100A has first display areas 121₁ through 121₄ that are capable of displaying icons, and a second display area 122 that is capable of displaying character information or the like. In the following, when these first display areas 121₁ through 121₄ are being referred to generically, they will be termed the "first display areas 121".

Note that the first display areas 121 fulfil the functions of the first display areas 721 of the embodiment described above, and also the second display area 122 fulfils the function of the second display area 722 of the embodiment described above.

The first display areas 121ⱼ (where j=1 through 4) are disposed upon the respective keytop portions of the actuation keys 110ⱼ. Moreover, the second display area 122 is disposed in a region that is different from the regions in which the actuation keys 110ⱼ are disposed.

And the mobile terminal device 200A comprises a display unit 230. Here, a touch panel not shown in the figures is disposed upon a display screen of the display unit 230, and input actuation can be performed by employing that touch panel. Note that the display unit 230 is adapted to fulfil the function of the mobile display unit 830 of the embodiment described above.

### <<Configuration of the information processing device 100A>>

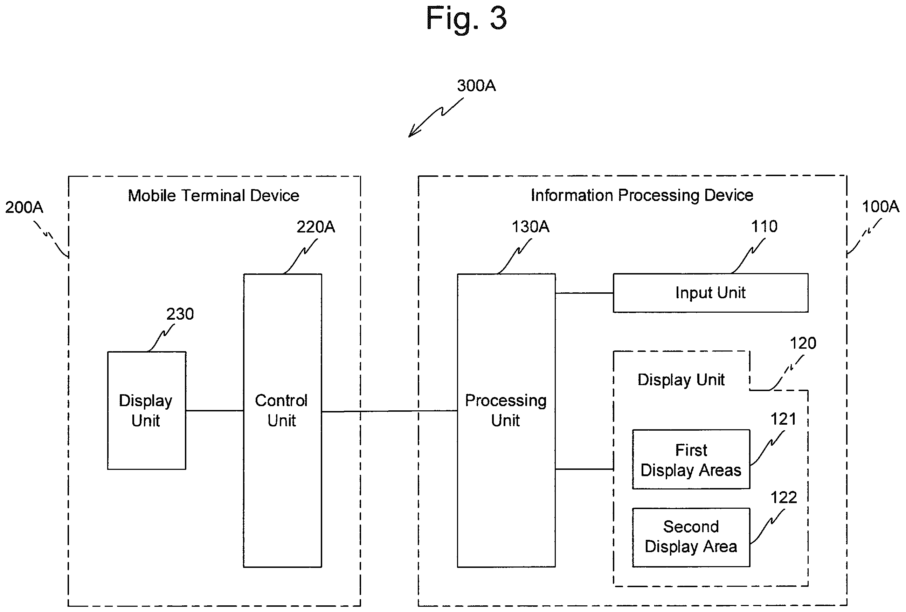

As shown in Fig. 3, in addition to the input unit 110 described above, the information processing device 100A also comprises a display unit 210 and a processing unit 130A. Here, the information processing device 100A also includes various elements other than the above elements. And the information processing device 100A is adapted to perform operation while cooperating with the mobile terminal device 200A, or alternatively to perform operation while not cooperating with the mobile terminal device 200A, by changing over between these two operational modes.

The display unit 120 has the first display areas 121 and the second display area 122 described above. And the display unit 120 receives display data sent from the processing unit 130A. Moreover, the display unit 120 provides a display according to the display data. In other words, the display unit 120 is adapted to fulfil the function of the information display unit 720 in the embodiment described above.

The processing unit 130A is built to include a central processing device (CPU: Central Processing Unit) and so on. The processing unit 130A is adapted to implement the functions of the information processing device 100A by executing programs of various types. These functions include the function of the display processing unit 730 in the embodiment described above.

In other words, when the information processing device 100A is performing cooperative operation with the mobile terminal device 200A, the processing unit 130A receives a display designation transmitted from the mobile terminal device 200A. And the processing unit 130A generates display data on the basis of the display designation. The display data that has been generated in this manner is sent to the display unit 120. As a result, a display is provided by the display unit 120, according to the display designation transmitted from the mobile terminal device 200A.

Note that, when the information processing device 100A is not performing cooperative operation with the mobile terminal device 200A, the processing unit 130A generates individual display data, and sends the display data that has thus been generated to the display unit 120. As a result, a display individual to the information processing device 100A is provided by the display unit 120.

### <<Configuration of the mobile terminal device 200A>>

As shown in Fig. 3, in addition to the display unit 230 and the touch panel described above, the mobile terminal device 200A also comprises a control unit 220A.

The control unit 220A comprises a central processing device (CPU: Central Processing Unit) and so on. The control unit 220A is adapted to implement the function of the mobile terminal device 200A by executing programs of various types. These functions include the functions of the specification unit 810 and the display control unit 820 of the embodiment described above.

Note that the control unit 220A internally stores icon allocation information related to allocation of icon displays to the first display areas 121 and to the display unit 230 for each operational mode of the mobile terminal device 200A, and also internally stores display information for the second display area 122 for each operational state of the mobile terminal device 200A. Here, information is included in the icon allocation information specifying the shapes of one or more icons to be displayed on the display unit 230 when cooperative operation is not being performed, and also information specifying the shapes of icons to be displayed in the first display areas 121 during cooperative operation.

Furthermore it is ensured that, in the icon allocation information, the icons that are allocated to the first display areas 121 are not included among the icons that are allocated to the display unit 230 according to the operational mode. Moreover, it is ensured that those icons, among the icons that, while they are displayed in the first display areas 121 before change of the operational mode, are not displayed in the first display areas 121 after the change of operational mode, for which display is determined to be ensured also in the operational mode after change, are included among the icons that are allocated by the icon allocation information to the display unit 230.

The control unit 220A specifies the operational state, which includes the operational mode of the mobile terminal device 200A. Here, the operational mode specifies the operation of one of various applications that can be executed by the mobile terminal device 200A. A navigation mode in which guidance for the user is performed, an audio mode in which reproduction control of music and so on is performed, a home screen mode in which a home screen is initially displayed when the mobile terminal device 200A and the information processing device 100A are connected together, and so on may be cited as examples of operational modes. Note that the possible operational modes are not limited to these examples; for example, modes of various types of which examples are not shown may also be included, such as a telephone conversation mode or an email mode or the like.

Examples that may be cited of functions that can be allocated as icons when the operational mode is the navigation mode are a function of displaying the current position of the user, a scaling function of enlarging or shrinking a map, a voice recognition function of receiving voice input from the user, and so on. Moreover, examples that may be cited of functions that can be allocated as icons when the operational mode is the audio mode are functions of reproducing music, pausing, fast forwarding, rewinding, and so on.

Furthermore, examples that may be cited of functions that can be allocated as icons when the operational mode is the home screen mode are a function of transitioning to the navigation mode described above, and a function of transitioning to the audio mode described above. Moreover, in the case of the home screen mode, it would also be acceptable to arrange to allocate functions that are frequently employed by the user as icons.

Note that the functions allocated to the icons for each of the operational modes are not limited to the examples described above.

The functions that are allocated to the icons corresponding to the operational modes are stored in correspondence with each of the operational modes. This correspondence may be set in advance by the manufacturer, or may be arranged to be changed by the user as desired.

When the mobile terminal device 200A is performing cooperative operation with the information processing device 100A, depending upon the specification result, the control unit 220A performs generation of a display designation transmitted to the information processing device 100A (more specifically, to the processing unit 130A), and generation of display data corresponding to the image displayed upon the display unit 230. Note that the processing that is executed by the control unit 220A for generating the display designation and the display data during cooperative operation will be described hereinafter.

The display designation that has been generated in this manner is transmitted to the information processing device 100A. Moreover, the display data that has thus been generated is sent to the display unit 230.

Note that, when the mobile terminal device 200A is not performing cooperative operation with the information processing device 100A, the control unit 220A generates individual display data, and sends the display data that has thus been generated to the display unit 230. As a result, a display individual to the mobile terminal device 200A is provided by the display unit 230.

The display unit 230 receives the display data sent from the control unit 220A. And the display unit 230 provides a display according to the display data. In other words, the display unit 230 is adapted to fulfil the function of the mobile display unit 830 of the embodiment described above.

### <Operation>

Next, the operation of the cooperative system 300A having the configuration described above will be explained, with attention being principally concentrated upon the display control procedure performed by the control unit 220A during cooperative operation. Note that the information processing device 100A and the mobile terminal device 200A are performing cooperative operation.

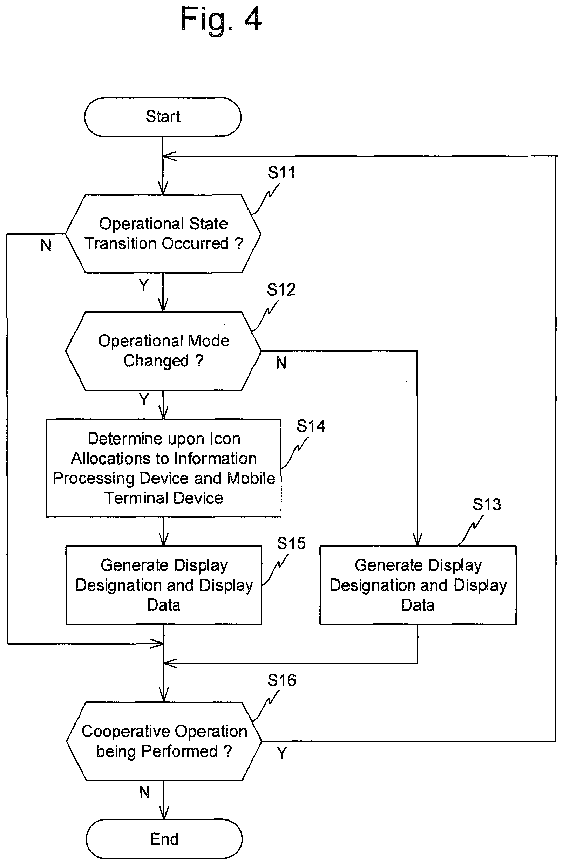

As shown in Fig. 4, when the operational state is specified, including the operational mode of the mobile terminal device 200A during cooperative operation, in a step S11, on the basis of the result of the specification, the control unit 220A makes a decision as to whether or not an operational state transition of the mobile terminal device 200A has occurred. If the result of the decision in the step S11 is negative (N in the step S11), then the flow of control is transferred to a step S16 which will be described hereinafter.

When a new operational state is specified and the result of the decision in the step S11 is affirmative (Y in the step S11), the flow of control proceeds to a step S12. In the step S12, the control unit 220A makes a decision as to whether or not the operational mode has changed.

If the result of the decision in the step S12 is negative (N in the step S12), the flow of control proceeds to a step S13. In the step S13, the control unit 220A generates a display designation to the information processing device 100A for when the operational state undergoes a transition not accompanied by any change of the operational mode, and also generates display data which is sent to the display unit 230.

In the processing of the step S13, the control unit 220A generates display data corresponding to the image that is to be displayed upon the display unit 230 after the operational state transition. And the control unit 220A sends this display data that has thus been generated to the display unit 230. As a result, this image after the operational state transition is displayed upon the display unit 230.

Subsequently, the control unit 220A performs an information change decision as to whether or not, along with this transition of the operational state, the information displayed in the second display area 122 is to be changed. If the result of the information change decision is negative, then the control unit 220A terminates the processing of the step S13 without generating any display designation or display data. And then the flow of control proceeds to the step S16.

If the result of the information change decision is affirmative, then, on the basis of the display information described above that is internally stored, the control unit 220A generates new information to be displayed in the second display area 122 as a display designation. And the control unit 220A transmits the display designation that has thus been generated to the information processing device 100A. As a result, information according to the new operational state is displayed in the second display area 122. And then the processing of the step S13 terminates, and the flow of control is transferred to the step S16.

If the result of the decision in the step S12 described above is affirmative (Y in the step S12), then the flow of control is transferred to a step S14. In the step S14, on the basis of the icon allocation information described above stored internally, the control unit 220A determines upon icons corresponding to the new operational mode to be displayed in the first display areas 121, and upon one or more icons corresponding to the new operational mode to be displayed by the display unit 230.

Next in a step S15 the control unit 220A generates display data corresponding to the image to be displayed by the display unit 230 after the change of operational mode, including the icons that have been determined as icons to be displayed by the display unit 230. And the control unit 220A sends the display data that has thus been generated to the display unit 230. As a result, the image after change of the operational mode is displayed by the display unit 230.

Next, along with the change of operational mode, the control unit 220A generates information including the new operational mode to be displayed in the second display area 122. Subsequently, the control unit 220A generates, as a display designation, information including the icons to be displayed in the first display areas 121 and their shapes, and also including the new operational mode to be displayed in the second display area 122. And the control unit 220A transmits the display designation that has thus been generated to the information processing device 100A. As a result, along with icons corresponding to the new operational mode of the mobile terminal device 200A being displayed upon the first display areas 121, also information corresponding to the new operational mode is displayed in the second display area 122.

When the processing of the step S15 has terminated in this manner, the flow of control proceeds to the step S16. In the step S16, the control unit 220A makes a decision as to whether or not cooperative operation is currently being performed. If the result of the decision in the step S16 is affirmative (Y in the step S16), then the flow of control returns to the step S11. And subsequently the processing of steps S11 through S16 is repeated, until the result of the decision in the step S16 becomes negative. Then, when the result of the decision in the step S16 becomes negative (N in the step S16), the display control procedure performed by the control unit 220A during cooperative operation is terminated.

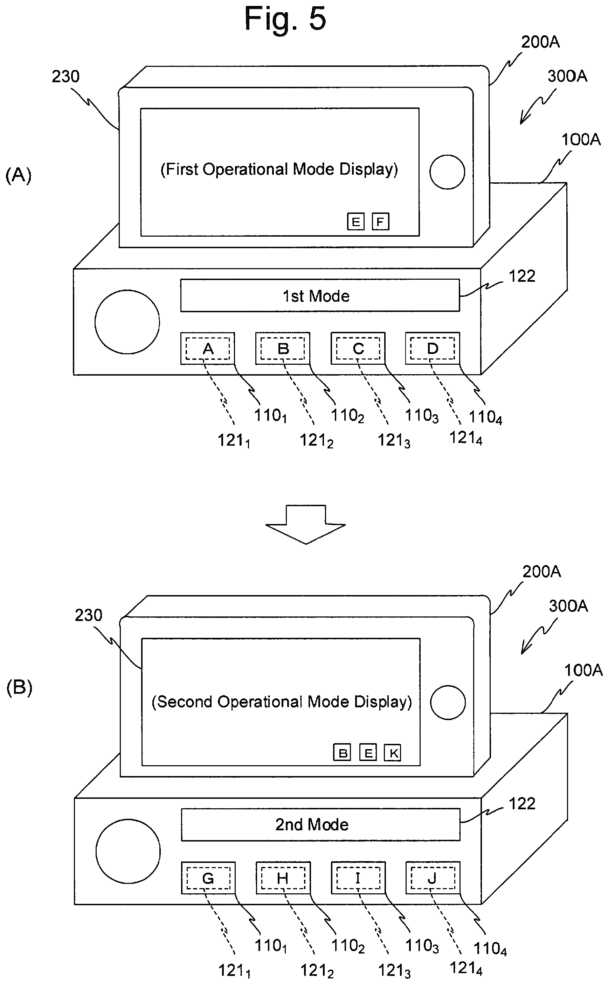

Note that, in Fig. 5, an example is shown of the display when the operational mode has changed from the first operational mode to the second operational mode. In Fig. 5, an example is shown of icons A through K.

When the information processing device 100A and the mobile terminal device 200A are not performing cooperative operation, individual displays are provided upon the display unit 120 and the display unit 230 of the information processing device 100A and the mobile terminal device 200A respectively, as described above.

As described above, in the first example, when the operational state that includes the operational mode of the mobile terminal device 200A is specified, if the information processing device 100A and the mobile terminal device 200A are performing cooperative operation, then the control unit 220A makes a decision, according to the result of the specification, as to whether or not the operational made has changed. And if the operational mode has changed, then, according to the change of the operational mode, the control unit 220A generates a display designation that includes icons to be displayed in the first display areas 121 of the information processing device 100A and their shapes. And the control unit 220A transmits the display designation that has thus been generated to the information processing device 100A.

Thus, according to the first example, during actuation input to the mobile terminal device 200A, it is possible to employ the input unit 110 of the information processing device 100A in an appropriate manner, and therefore it is possible to enhance the convenience for the user.

Furthermore, in the first example, the control unit 220A includes those icons, among the icons that, while they are to be displayed in the first display areas 121 before change of the operational mode, are not to be displayed in the first display areas 121 after the change of operational mode, and for which display is determined to be ensured also in the operational mode after change, in the icons to be displayed upon the display unit 230. And the control unit 220A generates display data corresponding to an image to be displayed upon the display unit 230 after the operational state transition, including one or more icons that have been determined to be icons to be displayed upon the display unit 230, and sends the display data that has thus been generated to the display unit 230. Due to this, it is possible to perform icon display in an appropriate manner, so that it is possible to enhance the convenience for the user.

Moreover, in the first example, the shapes of the icons that are displayed in the first display areal 121 are the same as the shapes of the icons that are displayed upon the display unit 230 in order to actuate the same functions when the mobile terminal device 200A and the information processing device 100A are not performing cooperative operation (including the case in which they are not connected together). Due to this, it is possible for the user to perform input actuation without any sense of discomfort when he is performing input to the mobile terminal device 200A by employing the actuation regions disposed in the first display areas 121.

Yet further, in the first example, information about the operational state of the mobile terminal device 200A is displayed in the second display area 122. Due to this, it is possible to enhance the convenience for a user who is performing input by employing the actuation region in which the first display areas 121 are disposed.

Still further, this information processing device may be an on-board unit that is mounted to a vehicle, or may be a unit that is set up indoors in a dwelling.

Even further, in the first example, the actuation regions of the input units 110 of the information processing device 100A have shapes that are concaved with respect to the peripheral regions of these actuation regions, and accordingly they are shapes that can be easily identified by the sense of touch. Due to this, it is possible to enhance the convenience for the user by enabling him to perform identification of the actuation regions simply and easily.

Still further, in the first example, the mobile terminal device 200A is held by the holding unit 150 that is provided to the information processing device 100A so as to be freely detachable. Due to this, if for example the information processing device 100A is an on-board unit that is mounted to a vehicle, then it is possible to dispose the mobile terminal device 200A in a position that is fixed from the point of view of the user, and, since the mobile terminal device 200A is thus disposed in a position in which the user can simultaneously check visually both the information processing device 100A and the mobile terminal device 200A, accordingly it is possible to enhance the convenience for the user.

### [The second example]

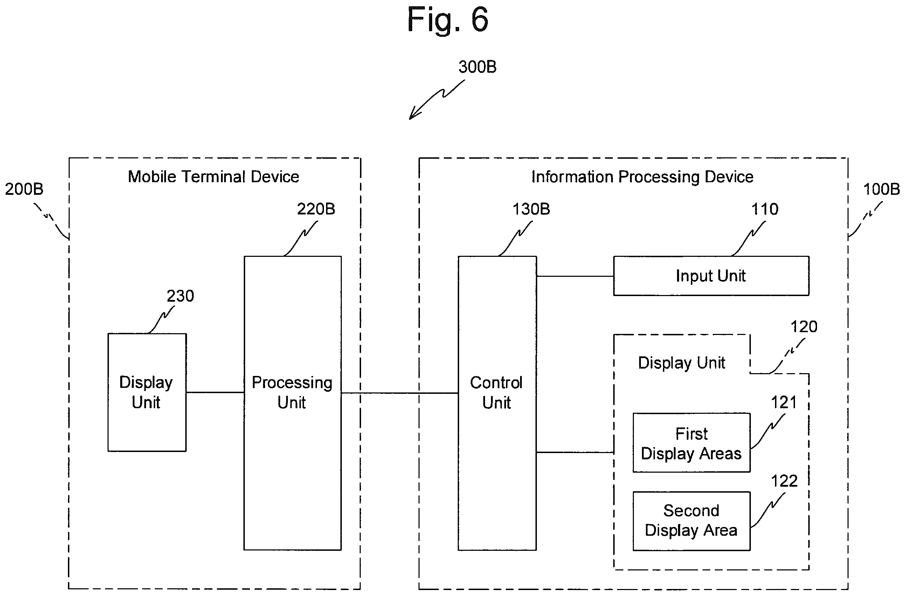

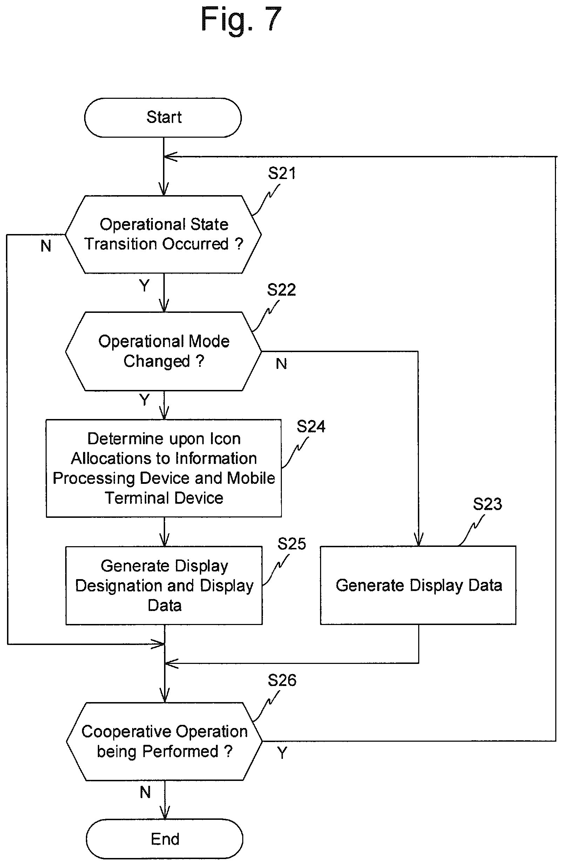

Next, the second example of the present invention will be explained with principal reference to Figs. 6 and 7.

### <Configuration>

The configuration of a cooperative system 300B according to the second example is shown in Fig. 6. As shown in the Fig. 6, as compared to the cooperative system 300A described above (refer to Fig. 3), the cooperative system 300B differs by the features that an information processing device 100B is provided instead of the information processing device 100A, and that a mobile terminal device 200B is provided instead of the mobile terminal device 200A.

And, as compared to the information processing device 100A described above, the information processing device 100B differs by the feature that a control unit 130B is provided instead of the processing unit 130A. Moreover, as compared to the mobile terminal device 200A described above, the mobile terminal device 200B differs by the feature that a processing unit 220B is provided instead of the control unit 220A. The following explanation will principally concentrate upon these features of difference.

Note that the processing unit 220B is adapted, when the mobile terminal device 200B and the information processing device 100B are performing cooperative operation, to specify the operational state of the mobile terminal device 200B, and to transmit the result of the specification to the information processing device 100B (more specifically, to the control unit 130B).

When the mobile terminal device 200B and the information processing device 100B are performing cooperative operation, the processing unit 220B receives a display designation transmitted from the information processing device 100B. And, in consideration of the icon allocation in that display designation, the processing unit 220B generates display data for an image to be displayed upon the display unit 230. The display data that has been generated in this manner is sent to the display unit 230. As a result, a display is provided by the display unit 230 according to the display designation that is transmitted from the information processing device 100B.

In a similar manner to the case with the control unit 220A described above, the control unit 130B internally stores icon allocation information and display information. The control unit 130B receives the specification result transmitted from the processing unit 220B. And, according to the specification result, the control unit 130B performs generation of a display designation to be transmitted to the mobile terminal device 200B (more specifically, to the processing unit 220B), and of display data corresponding to an image to be displayed upon the display unit 120. Note that this processing executed by the control unit 130B during cooperative operation for generation of a display designation and display data will be described hereinafter.

The display designation that has thus been generated is transmitted to the mobile terminal device 200B. Moreover, the display data that has thus been generated is transmitted to the display unit 120.

Note that, when the mobile terminal device 200B is not performing cooperative operation with the information processing device 100B, the control unit 130B generates individual display data, and sends the display data that has thus been generated to the display unit 120. As a result, an individual display is provided by the display unit 120 upon the information processing device 100B.

### <Operation>

Next, the operation of the cooperative system 300B having the configuration described above will be explained, with attention being principally concentrated upon the processing perform by the control unit 130B during cooperative operation. Note that the processing device 100B and the mobile terminal device 200B are performing cooperative operation.

As shown in Fig. 7, during cooperative operation, upon receipt of the specification result of the operational state of the mobile terminal device 200B specified by the processing unit 220B, in a step S21 the control unit 130B makes a decision as to whether or not an operational state transition of the mobile terminal device 200B has occurred. If the result of the decision in the step S21 is negative (N in the step S21), then the flow of control is transferred to a step S26 which will be described hereinafter.

If a new operational state is identified so that the result of the decision in the step S21 is affirmative (Y in the step S21), then the flow of control proceeds to a step S22. In the step S22, the control unit 130B makes a decision as to whether or not the operational mode has changed.

If the result of the decision in the step S22 is negative (N in the step S22), then the flow of control proceeds to a step S23. In the step S23, the control unit 130B generates display data to be send to the display unit 120.

Note that, in the step S23, the control unit 130B makes an information change decision as to whether or not, together with the transition of operational state, the information displayed in the second display area 122 is to be changed. If the result of the information change decision is negative, then the control unit 130B does not generate any data for display, and terminates the processing of the step S23. And the flow of control is transferred to the step S26.

If the result of the information change decision is affirmative, then, on the basis of the display information described above that is stored internally, the control unit 130B generates display data to be sent to the display unit 120. And the control unit 130B sends the display data that has thus been generated to the display unit 120. As a result, information according to the new operational state is displayed in the second display area 122. And then the processing of the step S23 terminates, and the flow of control is transferred to the step S26.

If the result of the decision in the step S22 described above is affirmative (Y in the step S22), then the flow of control is transferred to a step S24. In the step S24, on the basis of the icon allocation information described above that is stored internally, the control unit 130B determines upon icons according to the new operational mode to be displayed in the first display areas 121, and upon icons according to the new operational mode to be displayed upon the display unit 230.

And next in a step S25 the control unit 130B generates a display designation for the icons that have been determined as being icons to be displayed upon the display unit 230. And the control unit 130B sends the display designation that has thus been generated to the processing unit 220B. As a result, the image after the change of operational mode is displayed upon the display unit 230.

Next, along with the change of operational mode, the control unit 130B generates information including the new operational mode to be displayed upon the second display area 122. Subsequently the control unit 130B generates display data including icons to be displayed in the first display areas 121 and information corresponding to the new operational mode to be displayed in the second display area 122. Then the control unit 130B sends the display data that has thus been generated to the display unit 120. As a result, along with icons according to the new operational mode of the mobile terminal device 200B being displayed in the first display areas 121, also information according to the new operational mode is displayed in the second display area 122.

When the processing of the step S25 has been terminated in this manner, then the flow of control proceeds to the step S26. In the step S26, the control unit 130B makes a decision as to whether or not cooperative operation is currently taking place. If the result of this decision in the step S26 is affirmative (Y in the step S26), the flow of control returns to the step S21. And subsequently the processing of steps S21 through S26 is repeated until the result of the decision in the step S26 becomes negative. And, when the result of the decision in the step S26 becomes negative (N in the step S26), the display procedure of the control unit 130B during cooperative operation terminates.

Note that, when the information processing device 100B and the mobile terminal device 200B are not performing cooperative operation, individual displays are respectively provided upon the display unit 120 of the information processing device 100B and upon the display unit 230 of the mobile terminal device 200B, as described above.

As has been explained above, according to the second example, during actuation input to the mobile terminal device 200B, similar beneficial effects can be obtained as in the case of the first example described above.

### [The third example]

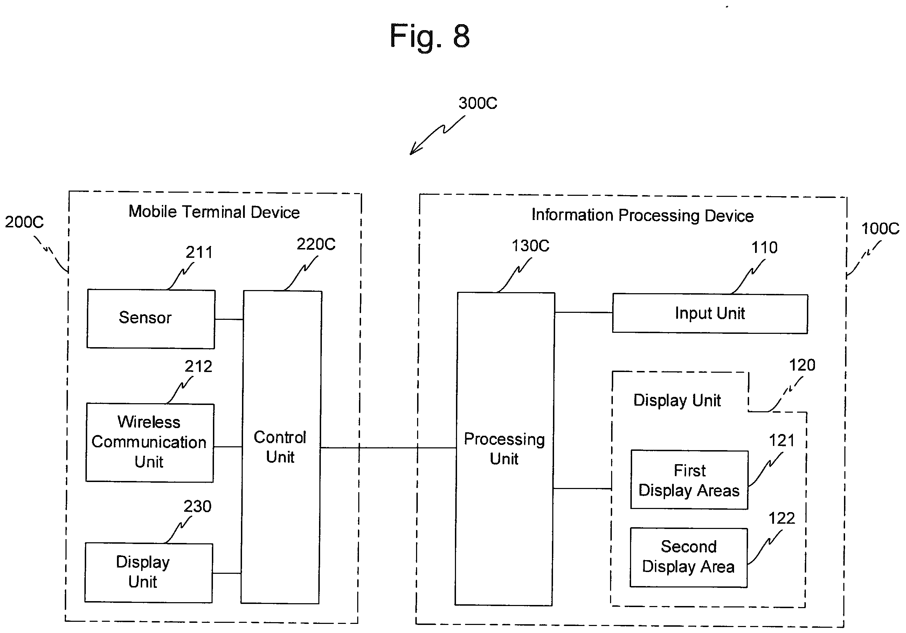

Next, the third example of the present invention will be explained with principal reference to Figs. 8 through 11.

### <Configuration>

The configuration of a cooperative system 300C according to the third example is shown in Fig. 8. As shown in this Fig. 8, as compared to the cooperative system 300A described above (refer to Fig. 3), the cooperative system 300C differs by the feature that, instead of the information processing device 100A, it is provided with an information processing device 100C, and by the feature that, instead of the mobile terminal device 200A, it is provided with a mobile terminal device 200C. The following explanation will principally concentrate upon these features of difference.

### <<Configuration of the information processing device 100C>>

As compared to the information processing device 100A, the information processing device 100C differs by the feature that, as shown in Fig. 8, it comprises a processing unit 130C instead of the processing unit 130A. And the information processing device 100C is adapted to be capable of operating while in cooperation with the mobile terminal device 200C, and of operating while not in cooperation with the mobile terminal device 200C, by changing over between these operational modes.

The processing unit 130C is built to comprise a central processing device (CPU: Central Processing Unit) and so on. It is arranged for the functions of the information processing device 100 to be implemented by the processing unit 130C executing programs of various types.

When the information processing device 100C is performing cooperative operation with the mobile terminal device 200C, the processing unit 130C receives a display designation transmitted from the mobile terminal device 200A. And, in consideration of the icon allocation in the display designation, the processing unit 130C generates display data for icons to be displayed in the first display areas 121. The display data that has been generated in this manner is sent to the display unit 120. As a result, display of icons according to the display designation transmitted from the information processing device 100C is performed in the first display areas 121. Here, when the information processing device 100C is performing cooperative operation with the mobile terminal device 200C, the processing unit 130C provides a display in the second display area 122 corresponding to the operational mode of the mobile terminal device 200C.

Note that, when the information processing device 100C is not performing cooperative operation with the mobile terminal device 200C, the processing unit 130C generates individual display data, and sends the display data that has thus been generated to the display unit 120. As a result, an individual display is provided by the information processing device 100C upon the display unit 120.

### <<Configuration of the mobile terminal device 200C>>

As shown in Fig. 8, in addition to the display unit 230 and the touch panel mentioned above, the mobile terminal device 200C comprises a sensor 211, a wireless communication unit 212, and a control unit 220C. Note that, in a similar manner to the case with the first example described above, a touch panel that can receive user actuation is disposed upon the display screen of the display unit 230.

In the third example, an acceleration sensor is included as the sensor 211. The result of acceleration detection by this sensor 211 is sent to the control unit 220C. Note that, when the result of acceleration detection is received by the sensor 211, the control unit 220C is adapted to perform time integration processing and so on of this acceleration, and to acquire the speed of movement of the mobile terminal device 200C (i.e. the speed of a mobile body that moves along with the mobile terminal device 200C).

The wireless communication unit 212 receives urgency level information such as disaster information or the like via a communication network. And the wireless communication unit 212 sends this urgency level information that it has acquired to the control unit 220C. Note that, upon receipt of urgency level information sent from the wireless communication unit 212, the control unit 220C is adapted to acquire the urgency level corresponding to the urgency level information.

The control unit 220C is built to comprise a central processing device (CPU: Central Processing Unit) and so on. It is arranged for the functions of the mobile terminal device 200 to be implemented by the control unit 220C executing programs of various types.

The control unit 220C internally stores icons to be displayed upon the display unit 230 when cooperative operation is not being performed, and their shapes. Moreover, the control unit 220C internally stores layout information for the actuation regions of the input unit 110 of the information processing device 100C.

Furthermore, the control unit 220C internally stores touch keys corresponding to the icons displayed upon the display unit 230, and degree of importance information for each icon that is determined by the way in which the frequency of utilization of the key corresponding to that icon displayed in its corresponding first display area 121 is high and becomes higher. Moreover, the control unit 220C internally stores risk level information that specifies the level of risk entailed by actuation of the touch key corresponding to each of the icons being displayed upon the display unit 230.

Note that the risk level is determined in advance on the basis of the level of requirement for the user to look closely at the icon. For example, if the icon is an icon for a seek bar, then the risk level is set to be high, since the requirement for the user to look closely at this icon in order to adjust the position of the seek bar is high. On the other hand, if the icon is a track-up icon for reproduction of a musical piece, then the risk level is set to be low, since the level of requirement for the user to look closely at this icon is low. Furthermore, if the icon is an icon for setting the repeat mode during reproduction of a musical piece, since the repeat mode display changes each time the display is actuated and it cannot be said that the level of requirement to look closely at this icon is low, accordingly the risk level is determined to be lower than in the case of an icon for a seek bar and moreover to be higher than in the case of a track-up icon.

As described above, the control unit 220C acquires the speed of movement and the urgency level information. And, when the information processing device 100C is performing cooperative operation with the mobile terminal device 200C, the control unit 220C changes over between the first display mode and the second display mode on the basis of the speed of movement and the urgency level information that have thus been acquired.

For both the first and the second display mode, the control unit 220C generates display data corresponding to the image that is to be displayed upon the display unit 230, and sends the display data that has thus been generated to the display unit 230. And, in the second display mode, the control unit 220C transmits the display designation for the processing unit 130C to the information processing device 100C.

Here, the first display mode is a display mode in which icons corresponding to the operational mode of the information processing device 100C are displayed upon the display unit 120 of the information processing device 100C. Moreover, the second display mode is a display mode in which at least some of the icons that are displayed upon the display unit 230 in the first display mode are displayed in the first display areas 121, while some of the icons included in the icons displayed in the first display areas 121 are not displayed upon the display unit 230. Here, in the second display mode, a display corresponding to the operational mode of the information processing device 100C is provided upon the second display area 122.

Note that the processing executed by the control unit 220C will be described hereinafter.

The display unit 230 receives the display data sent from the control unit 220C. And the display unit 230 provides a display according to that display data.

Note that a touch panel that is capable of receiving user actuation is disposed upon the image displaying area of the display unit 230. And the control unit 220C internally stores the touch keys corresponding to the icons displayed upon the display unit 230, and the degree of importance information for each icon that is determined by the way in which the frequency of utilization of the key corresponding to that icon displayed in its corresponding first display area 121 is high and becomes higher. Moreover, the control unit 220C internally stores the risk level information that specifies the level of risk of actuation of the touch key corresponding to each of the icons being displayed upon the display unit 230.

### <Operation>

Next, the operation of the cooperative system 300C having the configuration described above will be explained, with attention being principally concentrated upon the display control procedure performed by the control unit 220C during cooperative operation. Here, display mode determination processing and display execution processing are considered to be included in the display control procedure.

Note that cooperative operation between the information processing device 100C and the mobile terminal device 200C is the initial display mode, and is the first display mode.

### <<Processing for display mode determination>>

First, the processing for determination of the display mode will be explained.

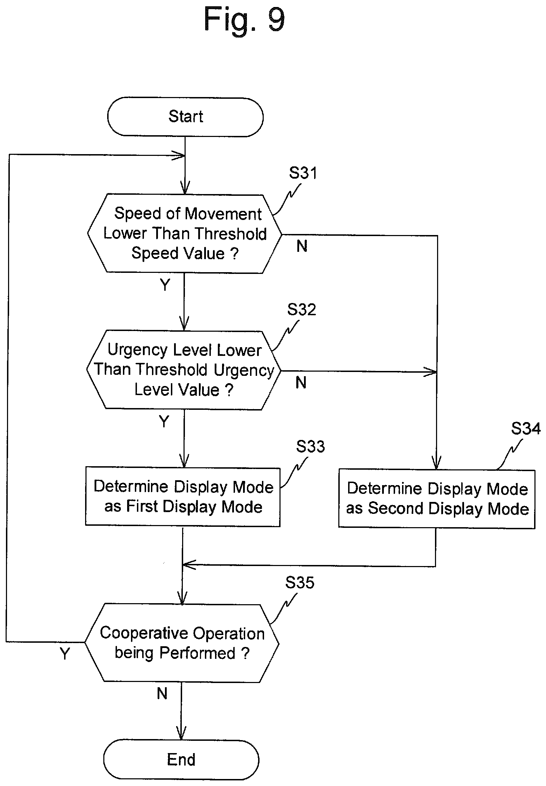

In the display mode determination processing, as shown in Fig. 9, in a step S31, having newly acquired the speed of movement or the urgency level, the control unit 220C makes a decision as to whether or not the speed of movement is lower than a threshold speed value. Note that this threshold speed value is determined in advance from the standpoint of ensuring security, on the basis of experiment, simulation, experience or the like.

If the result of the decision in the step S31 is affirmative (Y in the step S31), then the flow of control proceeds to a step S32. In the step S32, the control unit 220C makes a decision as to whether or not the urgency level is lower than a threshold urgency level value. Note that this threshold urgency level value is determined in advance from the standpoint of ensuring security, on the basis of experiment, simulation, experience or the like.

If the result of the decision in the step S32 is affirmative (Y in the step S32), then the flow of control proceeds to a step S33. In the step S33, the control unit 220C decides the display mode to be the first display mode. And the flow of control is then transferred to a step S35 which will be described hereinafter.

If the result of the determination in the step S31 or the result of the determination in the step S32 is negative (N in the step S31 or in the step S32), then the flow of control is transferred to a step S34. In the step S34, the control unit 220C decides the display mode to be the second display mode. And the flow of control is then transferred to the step S35.

In the step S35, the control unit 220C makes a decision as to whether or not cooperative operation is currently taking place. If the result of the decision in the step S35 is affirmative (Y in the step S35), then the flow of control returns to the step S31. And subsequently the processing of steps S31 through S35 is repeated, until the result of the decision in the step S35 becomes negative. And, when the result of the decision in the step S35 becomes negative (N in the step S35), this display mode determination processing terminates.

### <<Display execution processing>>

Next, the processing for display execution will be explained.

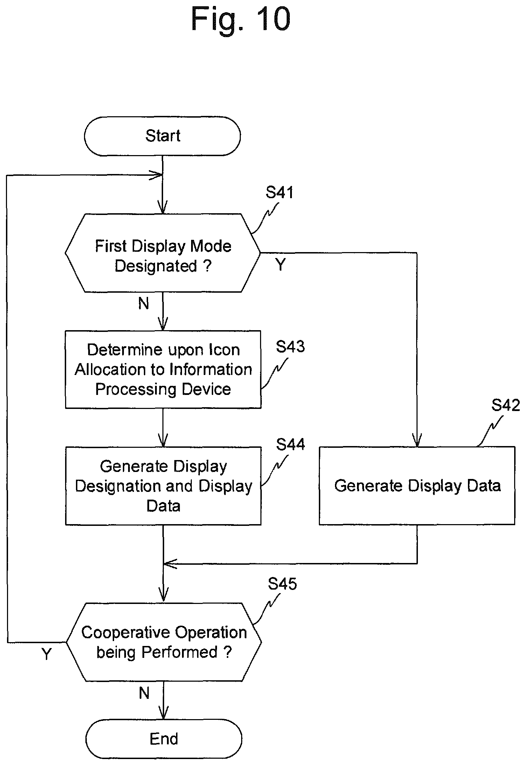

In the processing for display execution, as shown in Fig. 10, in a step S41, the control unit 220C makes a decision as to whether or not the display mode is the first display mode. If the result of the decision in the step S41 is affirmative (Y in the step S41), then the flow of control proceeds to a step S42.

In the step S42, the control unit 220C generates display data corresponding to an image that is similar to the image that is displayed upon the display unit 230 when the mobile terminal device 200C is not performing cooperative operation with the information processing device 100C. Subsequently, the control unit 220C sends the display data that has thus been generated to the display unit 230. As a result, a display in the first display mode is provided by the display unit 230, which is the same as when the mobile terminal device 200C is not performing cooperative operation with the information processing device 100C. Then the flow of control is transferred to a step S45.

If the result of the decision in the step S41 described above is negative (N in the step S41), then the flow of control is transferred to a step S43. In the step S43, on the basis of the degree of importance information, the risk level information, and the layout information that are stored internally, the control unit 220C determines upon icons to be displayed in the first display areas 121, with the proviso that it remains possible to ensure safety of actuation,

Next, in a step S44, the control unit 220C generates a display designation to be transmitted to the information processing device 100C, and display data to be sent to the display unit 230.

In the processing of the step S44, the control unit 220C generates a display designation that includes the shapes and arrangement of the icons to be displayed in the first display areas 121, as decided in the step S43. And the control unit 220C transmits this display designation that has thus been generated to the information processing device 100C. As a result, icons according to that display designation are displayed in the first display areas 121.

Next, the control unit 220C determines upon one or more icons to be displayed upon the display unit 230. The icon or icons that have been determined upon in this manner are icons to be displayed in the first display areas 121, and moreover are icons other than icons for which there would be a safety hazard during actuation. In other words, icons for which the degree of importance is high and for which the risk level is sufficiently low are determined as being icons to be displayed upon the display unit 230 in the second display mode.

Subsequently, in the case of the first display mode, the control unit 220C determines upon an image that is a part of the image displayed upon the display unit 230, and that displays as enlarged information that is important in the current operational state. And the control unit 220C generates display data according to the image that has thus been determined upon, and according to an image corresponding to the icons that have been determined to be displayed upon the display unit 230, and sends this display data that has thus been generated to the display unit 230. As a result, a display in the second display mode is displayed upon the display unit 230.

In this manner, when the processing of the step S44 is completed, the flow of control proceeds to the step S45. In the step S45, the control unit 220C makes a decision as to whether or not cooperative operation is taking place.

If the result of the decision in the step S45 is affirmative (Y in the step S45), then the flow of control returns to step S41. And subsequently the processing of steps S41 through S45 is repeated, until the result of the decision in the step S45 becomes negative. Then, when the result of the decision in the step S45 becomes negative (N in the step S45), the processing for display execution terminates.

Note that, when the information processing device 100C and the mobile terminal device 200C are not performing cooperative operation, a similar display is provided by the display unit 230 to that provided during the first display mode, and no display is provided upon the display unit 120.

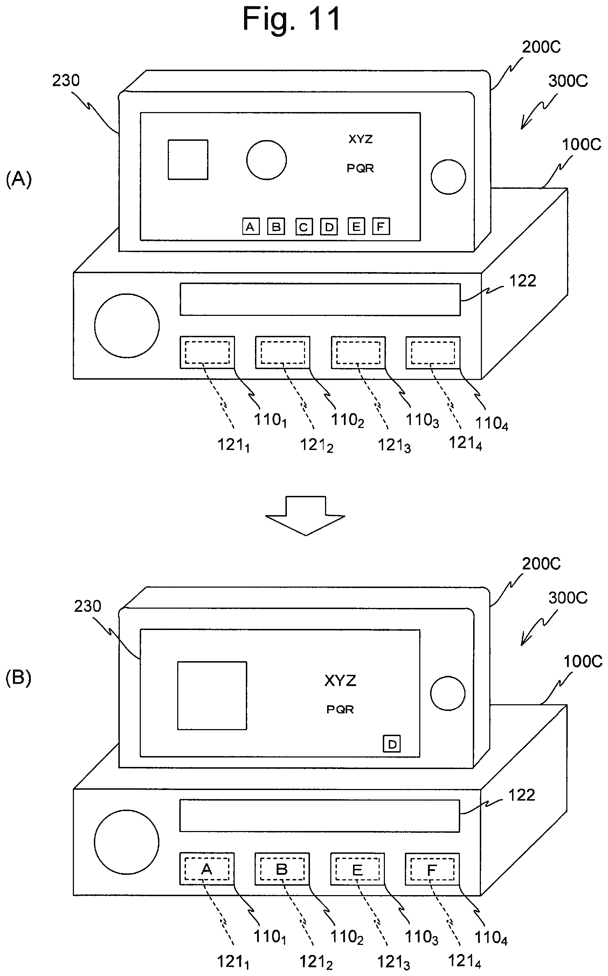

Note that, in Fig. 11, an example of display is illustrated when the display mode has changed from the first display mode to the second display mode. Here, an example of the display during the first display mode is shown in Fig. 11(A), while an example of the display during the second display mode is shown in Fig. 11(B).

As explained above, in the third example, when the speed of movement and the urgency level have been acquired, the control unit 220C makes a decision, on the basis of the speed of movement and urgency level, as to whether or not, in the first display mode, it is appropriate for the user to perform actuation by employing the icons displayed upon the display unit 230. If the result of this decision is negative, then the control unit 220C decides that the display mode should be the second display mode. Subsequently, the control unit 220C determines upon the icons to be displayed in the first display areas 121, and causes these icons that have been decided upon to be displayed in the first display areas 121. Moreover, icons are displayed upon the display unit 230, except for the icons that displayed in the first display areas 121, and except for icons for which it would not be appropriate for actuation to be performed even if they were to be displayed upon the display unit 230.

Thus, according to the third example, it is possible to employ the input unit 110 of the information processing device 100C in an appropriate manner while providing actuation input to the mobile terminal device 200C, according to the external state of the mobile terminal device 200C.

Moreover, with the third example, the control unit 220C selects the icons to be displayed in the first display areas 121 during the second display mode, according to the degrees of importance of input performed by employing the actuation regions respectively corresponding to the icons. Due to this, it is possible to select the icons to be displayed in the first display areas 121 during the second display mode in an appropriate manner.

Furthermore, with the third example, the control unit 220C determines the degree of importance of each icon according to the frequency of input performed by employing its corresponding actuation region. Due to this, it is possible to determine the degrees of importance of the icons in a logical manner.

Even further, with the third example, the control unit 220C selects icons to be displayed in the first display areas 121 in the second display mode according to the risk levels of performing input by employing the actuation regions respectively corresponding to each of the icons. Due to this, it is possible to determine the icons to be displayed in the first display areas 121 during the second display mode in an appropriate manner.

### [Modification of the examples]

The present invention is not to be considered as being limited to the first through third examples described above; modifications of various kinds are possible to implement thereto.

For example, in the first through the third examples described above, the shapes of the actuation regions on the input units of the information processing device were formed as concave with respect to the peripheral regions of the actuation regions. By contrast, it would also be acceptable to arrange to form the shapes of the actuation regions on the input units of the information processing device as convex with respect to the peripheral regions of the actuation regions. In this case as well, it would be possible for the user to perform identification of the actuation regions in a simple and easy manner, so that the convenience for the user can be enhanced.

And, for example, the information processing device of the first through the third examples described above may be a device that is mounted to a vehicle, or may be a device that is set up indoors in a dwelling.

Furthermore, in the first through the third examples described above, it was arranged to build the input units of the information processing device by employing hard keys. By contrast, it would also be acceptable to arrange to build the input units of the information processing device by employing soft keys such as touch keys or the like.

Moreover, in the first and the second examples described above, it was arranged to determine the icons to be displayed in the first display areas and the icons to be displayed upon the mobile display unit on the basis of the icon allocation information that was determined in advance. By contrast, it would also be acceptable to arrange to determine the icons to be displayed in the first display areas by giving higher priority order to icons displayed in each operational mode for which the frequency of usage of the actuation regions corresponding to those icons is higher.

Even further, in the first and the second examples described above, it was arranged for the control unit to store internally the icon allocation information and the display information for the second display area for each operational state of the mobile terminal device. By contrast, it would also be acceptable to arrange to store the icon display allocation information and the display information for the second display area for each operational state of the mobile terminal device upon an external server, and to arrange to acquire the information about the icon display allocation and the display information for the second display area related to the specified operational state from that external server via a communication network.

Still further, in the first through the third examples described above, the displayed objects whose display destinations were to be changed over were icons. By contrast, it would also be acceptable to arrange to change over the display of a displayed object other than an icon.

Yet further, in the third example described above, as the external conditions of the mobile terminal device that are taken into consideration when changing over the display mode, a combination of the speed of movement of a mobile body that moves together with the mobile terminal device and the urgency level were employed. By contrast, it would also be acceptable to arrange to change over the display mode according to any desired external condition.

Moreover, in the third example described above, it was arranged to determine to change over the display mode from the point of view of safety. By contrast, it would also be acceptable to arrange to determine to change over the display mode from some other point of view, such as user convenience or the like.

Furthermore, in the third example described above, in the second display mode, it was arranged to display, in the second display area, information corresponding to the operational mode of the mobile terminal device. By contrast, in the second display mode, it would also be acceptable to arrange to display, in the second display area, information corresponding to some external situation, such as information about the speed of movement or about the urgency level or the like.

Yet further, in the third example described above, in the first display mode, it was arranged to display, on the display unit of the information processing device, an icon corresponding to the operational mode of the mobile terminal device. By contrast, it would also be acceptable to arrange not to display anything upon the display unit of the information processing device in the first display mode.

## Claims

1. A mobile terminal device that is adapted to be connected to an information processing device (100A; 100B; 100C; 700) including an input unit (110; 710) having an actuation region that is capable of receiving user actuation and an information display unit (120; 720) having a first display area (121; 721) that is disposed in said actuation region, the mobile terminal comprising:
a specification unit (220A; 220B; 220C; 810) configured to specify an operational state including an operational mode of said mobile terminal device;
a mobile display unit (230; 830) configured so as to display icons; and
a display control unit (220A; 220B; 220C; 820);
wherein the display control unit is configured to control the display of the information processing device during cooperative operation of said mobile terminal device with the information processing device,
the display control unit (220A; 220B; 220C; 820) is configured, during cooperative operation with the information processing device, to display icons on the mobile display unit (230; 830), based on allocation information corresponding to an operational mode of said mobile terminal device, and
the display control unit does not control the display of the information processing device, and is configured to control the mobile display unit so as to display the icons corresponding to the operational mode of said mobile terminal device, when the cooperative operation with the information processing device is not executed,
wherein said operational mode is defined by an application that is being executed by the mobile terminal device, and said icons are allocated to functions of the application being executed by the mobile terminal device;
**characterised in that**
during cooperative operation with the information processing device, the display control unit is further configured, based on said allocation information, to display at least one other icon, which is different from said icons displayed on the mobile display unit, on the first display area (121; 721) disposed in the actuation region,
wherein the display control unit is configured to control the display of the own mobile terminal device so as not to display any icons that are displayed on the information processing device so as to operate the corresponding allocated functions of the application being executed on the mobile terminal device by means of the information processing device, during cooperative operation of said mobile terminal device with the information processing device.

2. The mobile terminal device according to claim 1, wherein the shape of the icon displayed in said first display area (121; 721) after said mobile terminal device cooperating with the information processing device (100A; 100B; 100C; 700) is the same as that of an icon displayed upon said mobile display unit (230; 830) provided to said mobile terminal device before said mobile terminal device cooperating with the information processing device (100A; 100B; 100C; 700).

3. The mobile terminal device according to claim 1 or claim 2, wherein said display control unit (220A; 220B; 220C; 820) is further configured to control information about a specified operational state to be displayed in a second display area (122; 722), disposed on said information processing device (100A; 100B; 100C; 700), that is different from said first display area (121; 721), said specified operational state includes said operational mode.

4. The mobile terminal device according to any one of claims 1 through 3, wherein, said display control unit (220A; 220B; 220C; 820) is configured, when said operational mode has changed from a first operational mode to a second operational mode, to control an icon that is displayed in said first display area (121; 721) during said first operational mode but is not displayed in said first display area (121; 721) during said second operational mode to be displayed upon said mobile display unit (230; 830) provided to said mobile terminal device.

5. A cooperative system comprising:
the mobile terminal device (200A; 200B; 200C; 800) according to any one of claims 1 to 4, and
the information processing device (100A; 100B; 100C; 700) that is connected to said mobile terminal device; wherein
said information processing device comprises:
an input unit (110; 710) having an actuation region that is capable of receiving user actuation; and
an information display unit (120; 720) having a first display area (121; 721) that is disposed in said actuation region.

6. The cooperative system according to claim 5, wherein said actuation region has a shape that can be identified by the sense of touch.

7. The cooperative system according to claim 6, wherein said actuation region has a shape that is convex with respect to the peripheral region of said actuation region.

8. The cooperative system according to claim 6, wherein said actuation region has a shape that is concave with respect to the peripheral region of said actuation region.

9. The cooperative system according to any one of claims 5 through 8, further comprising a holding unit (150) that is configured to detachably hold said mobile terminal device (200A).

10. A method for controlling a display employed by the mobile terminal device (200A; 200B; 200C; 800) according to any of claims 1 to 4, comprising the steps of:
a specifying step of said specification unit (220A; 220B; 220C; 810) specifying an operational state including an operational mode of said mobile terminal device (200A; 200B; 200C; 800);
an acquiring step of said display control unit (220A; 220B; 220C; 820) acquiring said operational mode; and
a display controlling step (S44) of controlling said display control unit (200A; 200B; 200C; 820) to display, during cooperative operation of said mobile terminal device with the information processing device
icons on the mobile display unit (230; 830) based on allocation information corresponding to an operational mode of said mobile terminal device, and at least one other icon, which is different from said icons displayed on the mobile display unit, in said first display area (121; 721) disposed in the actuation region, based on said allocation information, wherein
the display controlling step (S44) controls the display control unit (220A; 220B; 220C; 820) so as to control the display of the mobile terminal device so as not to display any icons that are displayed on the information processing device so as to operate application on the mobile terminal device by means of the information processing device, during cooperative operation of said mobile terminal device with the information processing device, and
the display controlling step does not control the display of the information processing device, and controls so as to display icons corresponding to the operational mode of said mobile terminal device, when the cooperative operation with the information processing device is not executed.

11. A non-transient computer readable medium having recorded thereon a program for controlling a display that, when executed, causes a computer in a mobile terminal device according to any one of claims 1 to 4 to execute the method for controlling a display according to claim 10.

## Patentansprüche

1. Eine mobile Anschlussvorrichtung, die dazu ausgelegt ist, mit einer Informationsverarbeitungsvorrichtung (100A; 100B; 100C; 700) angeschlossen zu werden, die eine Eingabeeinheit (110; 710) mit einem Betätigungsbereich, der eine Benutzerbetätigung empfangen kann, und eine Informationsanzeigeeinheit (120; 720) mit einem ersten Anzeigebereich (121; 721) aufweist, der in dem Betätigungsbereich angeordnet ist, wobei die mobile Anschlussvorrichtung aufweist:
eine Spezifikationseinheit (220A; 220B; 220C; 810), die so konfiguriert ist, dass sie einen Betriebszustand einschließlich eines Betriebsmodus der mobilen Anschlussvorrichtung spezifiziert;
eine mobile Anzeigeeinheit (230; 830), die so konfiguriert ist, dass sie Symbole anzeigt; und
eine Anzeigesteuereinheit (220A; 220B; 220C; 820);
wobei
die Anzeigesteuereinheit so konfiguriert ist, dass sie die Anzeige der Informationsverarbeitungsvorrichtung während des kooperativen Betriebs der mobilen Anschlussvorrichtung mit der Informationsverarbeitungsvorrichtung steuert,
die Anzeigesteuereinheit (220A; 220B; 220C; 820) so konfiguriert ist, dass sie während des kooperativen Betriebs mit der Informationsverarbeitungsvorrichtung Symbole auf der mobilen Anzeigeeinheit (230; 830) auf der Basis von Zuweisungsinformationen anzeigt, die einem Betriebsmodus der mobilen Anschlussvorrichtung entsprechen, und die Anzeigesteuereinheit die Anzeige der Informationsverarbeitungsvorrichtung nicht steuert und so konfiguriert ist, dass sie die mobile Anzeigeeinheit so steuert, dass sie die Symbole anzeigt, die dem Betriebsmodus der mobilen Anschlussvorrichtung entsprechen, wenn der kooperative Betrieb mit der Informationsverarbeitungsvorrichtung nicht ausgeführt wird, wobei der Betriebsmodus durch eine Anwendung definiert ist, die von der mobilen Anschlussvorrichtung ausgeführt wird, und die Symbole Funktionen der von der mobilen Anschlussvorrichtung ausgeführten Anwendung zugeordnet sind;
**dadurch gekennzeichnet, dass**
während des kooperativen Betriebs mit der Informationsverarbeitungsvorrichtung die Anzeigesteuereinheit ferner auf Basis der Zuordnungsinformationen so konfiguriert ist, dass sie mindestens ein weiteres Symbol, das sich von den auf der mobilen Anzeigeeinheit angezeigten Symbolen unterscheidet, in dem ersten Anzeigebereich (121; 721) anzeigt, der in dem Betätigungsbereich angeordnet ist,
wobei die Anzeigesteuereinheit so konfiguriert ist, dass sie
die Anzeige der eigenen mobilen Anschlussvorrichtung so steuert, dass keine Symbole angezeigt werden, die auf der Informationsverarbeitungsvorrichtung angezeigt werden, um die entsprechenden zugewiesenen Funktionen der auf der mobilen Anschlussvorrichtung ausgeführten Anwendung mittels der Informationsverarbeitungsvorrichtung während des kooperativen Betriebs der mobilen Anschlussvorrichtung mit der Informationsverarbeitungsvorrichtung zu betreiben.

2. Die mobile Anschlussvorrichtung gemäß Anspruch 1, wobei die Form des Symbols, das in dem ersten Anzeigebereich (121; 721) angezeigt wird, nachdem die mobile Anschlussvorrichtung mit der Informationsverarbeitungsvorrichtung (100A; 100B; 100C; 700) zusammenarbeitet, ist dieselbe wie die eines Symbols, das auf der mobilen Anzeigeeinheit (230; 830) angezeigt wird, die an der mobilen Anschlussvorrichtung vorgesehen ist, bevor die mobile Anschlussvorrichtung mit der Informationsverarbeitungsvorrichtung (100A; 100B; 100C; 700) zusammenarbeitet.

3. Die mobile Anschlussvorrichtung gemäß Anspruch 1 oder Anspruch 2, wobei die Anzeigesteuereinheit (220A; 220B; 220C; 820) ferner so konfiguriert ist, dass sie Informationen über einen bestimmten Betriebszustand steuert, die in einem zweiten Anzeigebereich (122; 722) anzuzeigen sind, der auf der Informationsverarbeitungsvorrichtung (100A; 100B; 100C; 700) anzuzeigen, der sich von dem ersten Anzeigebereich (121; 721) unterscheidet, wobei der bestimmte Betriebszustand den Betriebsmodus aufweist.

4. Die mobile Anschlussvorrichtung nach einem der Ansprüche 1 bis 3, wobei die Anzeigesteuereinheit (220A; 220B; 220C; 820) so konfiguriert ist, dass sie, wenn der Betriebsmodus von einem ersten Betriebsmodus in einen zweiten Betriebsmodus gewechselt hat, ein Symbol, das in dem ersten Anzeigebereich (121; 721) während des ersten Betriebsmodus angezeigt wird, aber nicht in dem ersten Anzeigebereich (121; 721) während des zweiten Betriebsmodus angezeigt wird, so steuert, dass es auf der mobilen Anzeigeeinheit (230; 830) angezeigt wird, die mit der mobilen Anschlussvorrichtung versehen ist.

5. Ein kooperatives System, das aufweist:
die mobile Anschlussvorrichtung (200A; 200B; 200C; 800) gemäß einem der Ansprüche 1 bis 4, und
die Informationsverarbeitungsvorrichtung (100A; 100B; 100C; 700), die mit der mobilen Anschlussvorrichtung verbunden ist; wobei
die Informationsverarbeitungsvorrichtung aufweist:
eine Eingabeeinheit (110; 710) mit einem Betätigungsbereich, der eine Benutzerbetätigung empfangen kann; und
eine Informationsanzeigeeinheit (120; 720) mit einem ersten Anzeigeabschnitt (121; 721), der in dem Betätigungsbereich angeordnet ist.

6. Das kooperative System nach Anspruch 5, wobei der Betätigungsbereich eine Form aufweist, die durch den Tastsinn identifiziert werden kann.

7. Das kooperative System nach Anspruch 6, wobei der Betätigungsbereich eine Form aufweist, die in Bezug auf den Randbereich des Betätigungsbereichs konvex ist.

8. Das kooperative System nach Anspruch 6, wobei der Betätigungsbereich eine Form aufweist, die in Bezug auf den Randbereich des Betätigungsbereichs konkav ist.

9. Das kooperative System nach einem der Ansprüche 5 bis 8, das ferner eine Halteeinheit (150) aufweist, die so konfiguriert ist, dass sie die mobile Anschlussvorrichtung (200A) lösbar hält.

10. Ein Verfahren zum Steuern einer Anzeige, die von der mobilen Anschlussvorrichtung (200A; 200B; 200C; 800) gemäß einem der Ansprüche 1 bis 4 verwendet wird, aufweisend die Schritte:
einen Spezifizierungsschritt der Spezifikationseinheit (220A; 220B; 220C; 810), der einen Betriebszustand spezifiziert, der einen Betriebsmodus der mobilen Anschlussvorrichtung (200A; 200B; 200C; 800);
einen Erfassungsschritt, bei dem die Anzeigesteuereinheit (220A; 220B; 220C; 820) den Betriebsmodus erfasst; und
einen Anzeigesteuerschritt (S44) zum Steuern der Anzeigesteuereinheit (200A; 200B; 200C; 820), um während des kooperativen Betriebs der mobilen Anschlussvorrichtung mit der Informationsverarbeitungsvorrichtung in dem ersten Anzeige-Bereich (121; 721), der in dem Betätigungsbereich angeordnet ist, auf der Grundlage von Zuweisungsinformationen, die einem Betriebsmodus der mobilen Endvorrichtung entsprechen, Symbole auf der mobilen Anzeigeeinheit (230; 830) anzuzeigen, und mindestens ein weiteres Symbol, das sich von den auf der mobilen Anzeigeeinheit angezeigten Symbolen unterscheidet, in dem ersten Anzeige-Bereich (121; 721), der in dem Betätigungsbereich angeordnet ist, auf der Grundlage der Zuweisungsinformationen, wobei
der Anzeigesteuerschritt (S44) die Anzeigesteuereinheit (220A; 220B; 220C; 820) so steuert, dass die Anzeige der mobilen Anschlussvorrichtung so gesteuert wird, dass keine Symbole angezeigt werden, die auf der Informationsverarbeitungsvorrichtung angezeigt werden, um eine Anwendung auf der mobilen Anschlussvorrichtung mittels der Informationsverarbeitungsvorrichtung zu betreiben, während der kooperativen Betrieb der mobilen Anschlussvorrichtung mit der Informationsverarbeitungsvorrichtung stattfindet, und
der Anzeigesteuerschritt die Anzeige der Informationsverarbeitungsvorrichtung nicht steuert und steuert, dass Symbole angezeigt werden, die dem
Betriebsmodus der mobilen Anschlussvorrichtung entsprechen, wenn der kooperative Betrieb mit der Informationsverarbeitungsvorrichtung nicht ausgeführt wird.

11. Ein nicht flüchtiges, computerlesbares Medium, auf dem ein Programm aufgezeichnet ist, das eine Anzeige steuert, die, wenn sie ausgeführt wird, einen Computer in einer mobilen Anschlussvorrichtung gemäß einem der Ansprüche 1 bis 4 veranlasst, das Verfahren zur Steuerung einer Anzeige gemäß Anspruch 10 auszuführen.

## Revendications

1. Dispositif terminal mobile qui est adapté pour être connecté à un dispositif de traitement d'informations (100A ; 100B ; 100C ; 700) incluant une unité d'entrée (110 ; 710) ayant une région d'actionnement qui est capable de recevoir un actionnement de l'utilisateur et une unité d'affichage d'informations (120 ; 720) ayant une première zone d'affichage (121 ; 721) qui est disposée dans ladite région d'actionnement, le terminal mobile comprenant :
une unité de spécification (220A ; 220B ; 220C ; 810) configurée pour spécifier un état opérationnel incluant un mode opérationnel dudit dispositif terminal mobile ;
une unité d'affichage mobile (230 ; 830) configurée pour afficher des icônes ; et
une unité de commande d'affichage (220A ; 220B ; 220C ; 820) ;
dans lequel l'unité de commande d'affichage est configurée pour commander l'affichage du dispositif de traitement d'informations pendant le fonctionnement coopératif dudit dispositif terminal mobile avec le dispositif de traitement d'informations,
l'unité de commande d'affichage (220A ; 220B ; 220C ; 820) est configurée, pendant le fonctionnement coopératif avec le dispositif de traitement d'informations, pour afficher des icônes sur l'unité d'affichage mobile (230 ; 830), sur la base d'informations d'attribution correspondant à un mode opérationnel dudit dispositif terminal mobile, et
l'unité de commande d'affichage ne commande pas l'affichage du dispositif de traitement d'informations, et est configurée pour commander l'unité d'affichage mobile de manière à afficher les icônes correspondant au mode opérationnel dudit dispositif terminal mobile, lorsque l'opération coopérative avec le dispositif de traitement d'informations n'est pas exécutée,
dans lequel ledit mode opérationnel est défini par une application qui est exécutée par le dispositif terminal mobile, et lesdites icônes sont attribuées à des fonctions de l'application exécutée par le dispositif terminal mobile ;
**caractérisé en ce que**
pendant le fonctionnement coopératif avec le dispositif de traitement d'informations, l'unité de commande d'affichage est en outre configurée, sur la base desdites informations d'attribution, pour afficher au moins une autre icône, qui est différente desdites icônes affichées sur l'unité d'affichage mobile, sur la première zone d'affichage (121 ; 721) disposée dans la région d'actionnement,
dans lequel l'unité de commande d'affichage est configurée pour commander l'affichage du propre dispositif terminal mobile de manière à n'afficher aucune icône affichée sur le dispositif de traitement d'informations pour faire fonctionner les fonctions attribuées correspondantes de l'application en cours d'exécution sur le dispositif terminal mobile au moyen du dispositif de traitement d'informations, pendant le fonctionnement coopératif dudit dispositif terminal mobile avec le dispositif de traitement d'informations.

2. Dispositif terminal mobile selon la revendication 1, dans lequel la forme de l'icône affichée dans ladite première zone d'affichage (121 ; 721) après que ledit dispositif terminal mobile coopère avec le dispositif de traitement d'informations (100a ; 100b ; 100c ; 700) est la même que celle d'une icône affichée sur ladite unité d'affichage mobile (230 ; 830) prévue pour ledit dispositif terminal mobile avant que ledit dispositif terminal mobile coopère avec le dispositif de traitement d'informations (100a ; 100b ; 100c ; 700).

3. Dispositif terminal mobile selon la revendication 1 ou la revendication 2, dans lequel ladite unité de commande d'affichage (220A ; 220B ; 220C ; 820) est en outre configurée pour commander des informations sur un état opérationnel spécifié à afficher dans une deuxième zone d'affichage (122 ; 722), disposée sur ledit dispositif de traitement d'informations (100A ; 100B ; 100C ; 700), qui est différente de ladite première zone d'affichage (121 ; 721), ledit état opérationnel spécifié inclut ledit mode opérationnel.

4. Dispositif terminal mobile selon l'une quelconque des revendications 1 à 3, dans lequel, ladite unité de commande d'affichage (220A ; 220B ; 220C ; 820) est configurée, lorsque ledit mode opérationnel est passé d'un premier mode opérationnel à un deuxième mode opérationnel, pour commander une icône qui est affichée dans ladite première zone d'affichage (121 ; 721) pendant ledit premier mode opérationnel mais qui n'est pas affichée dans ladite première zone d'affichage (121 ; 721) pendant ledit deuxième mode opérationnel pour être affichée sur ladite unité d'affichage mobile (230 ; 830) prévue pour ledit dispositif terminal mobile.

5. Système coopératif comprenant :
le dispositif terminal mobile (200A ; 200B ; 200C ; 800) selon l'une quelconque des revendications 1 à 4, et
le dispositif de traitement d'informations (100A ; 100B ; 100C ; 700) qui est connecté audit dispositif terminal mobile ; dans lequel
ledit dispositif de traitement d'informations comprend :
une unité d'entrée (110 ; 710) ayant une région d'actionnement qui est capable de recevoir un actionnement de l'utilisateur ; et
une unité d'affichage d'informations (120 ; 720) ayant une première zone d'affichage (121 ; 721) qui est disposée dans ladite région d'actionnement.

6. Système coopératif selon la revendication 5, dans lequel ladite région d'actionnement a une forme qui peut être identifiée par le sens du toucher.

7. Système coopératif selon la revendication 6, dans lequel ladite région d'actionnement a une forme convexe par rapport à la région périphérique de ladite région d'actionnement.

8. Système coopératif selon la revendication 6, dans lequel ladite région d'actionnement a une forme concave par rapport à la région périphérique de ladite région d'actionnement.

9. Système coopératif selon l'une quelconque des revendications 5 à 8, comprenant en outre une unité de maintien (150) qui est configurée pour maintenir de manière amovible ledit dispositif terminal mobile (200A).

10. Procédé pour commander un affichage employé par le dispositif terminal mobile (200A ; 200B ; 200C ; 800) selon l'une quelconque des revendications 1 à 4, comprenant les étapes de :
une étape de spécification de ladite unité de spécification (220A ; 220B ; 220C ; 810) spécifiant un état opérationnel incluant un mode opérationnel dudit dispositif terminal mobile (200A ; 200B ; 200C ; 800) ;
une étape d'acquisition de ladite unité de commande d'affichage (220A ; 220B ; 220C ; 820) d'acquisition dudit mode opérationnel ; et
une étape de commande d'affichage (S44) consistant à commander ladite unité de commande d'affichage (200A ; 200B ; 200C ; 820) pour afficher, pendant le fonctionnement coopératif dudit dispositif terminal mobile avec le dispositif de traitement d'informations, des icônes sur l'unité d'affichage mobile (230 ; 830) sur la base d'informations d'attribution correspondant à un mode opérationnel dudit dispositif terminal mobile, et au moins une autre icône, qui est différente desdites icônes affichées sur l'unité d'affichage mobile, dans ladite première zone d'affichage (121 ; 721) disposée dans la région d'actionnement, sur la base desdites informations d'attribution, dans lequel
l'étape de commande d'affichage (S44) commande l'unité de commande d'affichage (220A ; 220B ; 220C ; 820) de manière à commander l'affichage du dispositif terminal mobile de manière à n'afficher aucune icône affichée sur le dispositif de traitement d'informations pour faire fonctionner l'application sur le dispositif terminal mobile au moyen du dispositif de traitement d'informations, pendant le fonctionnement coopératif dudit dispositif terminal mobile avec le dispositif de traitement d'informations, et
l'étape de commande de l'affichage ne commande pas l'affichage du dispositif de traitement d'informations, et commande de manière à afficher les icônes correspondant au mode opérationnel dudit dispositif terminal mobile, lorsque l'opération coopérative avec le dispositif de traitement d'informations n'est pas exécutée.

11. Support lisible par ordinateur non transitoire sur lequel est enregistré un programme pour commander un affichage qui, lorsqu'il est exécuté, amène un ordinateur d'un dispositif terminal mobile selon l'une quelconque des revendications 1 à 4 à exécuter le procédé pour commander un affichage selon la revendication 10.
